# EUROPEAN PATENT APPLICATION

(11) **EP 2 354 780 A1**
(43) Date of publication of application: **10.08.2011**
(21) Application number: 09830249.0
(22) Date of filing: 25.09.2009
(51) Int. Cl.: G01N 17/04, G01M 19/00, G01N 27/26

(54) **OUTDOOR STRUCTURE AND METHOD OF ESTIMATING DETERIORATION OF COMPONENT MEMBER OF OUTDOOR STRUCTURE**

(30) Priority: 02.12.2008 JP 2008308008; 02.12.2008 JP 2008308009; 02.12.2008 JP 2008308010
(71) Applicant: Mitsubishi Heavy Industries, Ltd., Tokyo 108-8215 (JP)
(72) Inventor: DOBASHI, Shinsaku, Nagasaki, Nagasaki-ken 851-0392 (JP); TSUKAHARA, Chisato, Nagasaki, Nagasaki-ken 851-0392 (JP); TAKEDA, Kazuhiro, Nagasaki, Nagasaki-ken 851-0392 (JP); OKANO, Yasushi, Nagasaki, Nagasaki-ken 850-8610 (JP)
(74) Representative: Intès, Didier Gérard André
(86) International application number: PCT/JP2009/066641
(87) International publication number: WO 2010/064481

(57) **Abstract**

A corrosion sensor (11A) is installed on a tower (102), which is a structure such as a wind power generator, a substrate (12) of the corrosion sensor (11A) is made of a material (13A, 13B, ...) identical to a material of each constituent member (such as a generator) of, for example, a wind power generator that is the structure, a coating film (16A) is used to cover a plurality of conductive units (15) provided on a surface of the substrate (12) of the corrosion sensor (11A) via insulating units (14), respectively, with the coating film (16A), and the coating film (16A) identical to the coating film (16A) applied onto the constituent member (such as a generator) is applied entirely onto an outer surface (102a) of the tower (102) of the structure.

## Description

### Field

The present invention relates to an outdoor structure that can be prevented from salt damage while constantly monitoring a temporal change in the salt damage. Background

Because an outdoor structure such as a windmill is installed on a sea or on a coast, there is a concern that a transformer, a control board and the like provided in the windmill corrode due to salt damage. Therefore, it is necessary to make salt damage prediction suited for an internal material and coating of a device.

There is established an evaluation method, such methods of JIS Z2371 "Methods of Salt Spray Testing" and JIS K5621 "combined Cycle Test" (Non patent Literatures 1 and 2).

Moreover, there is recently proposed a corrosion sensor as a sensor that predicts an amount of corrosion resulting from salt damage (Patent Literature 1).

This corrosion sensor is explained. When two different kinds of metals (a substrate and a conductive unit) are made into a state of being isolated from each other by an insulating unit and ends of the both metals are exposed to environment, a water film connects the both metals to each other according to the environment. As a result, corrosion current flows. Because this current corresponds to a corrosion rate of a base metal, this sensor is used as a corrosion sensor sensing the corrosion of the base metal.

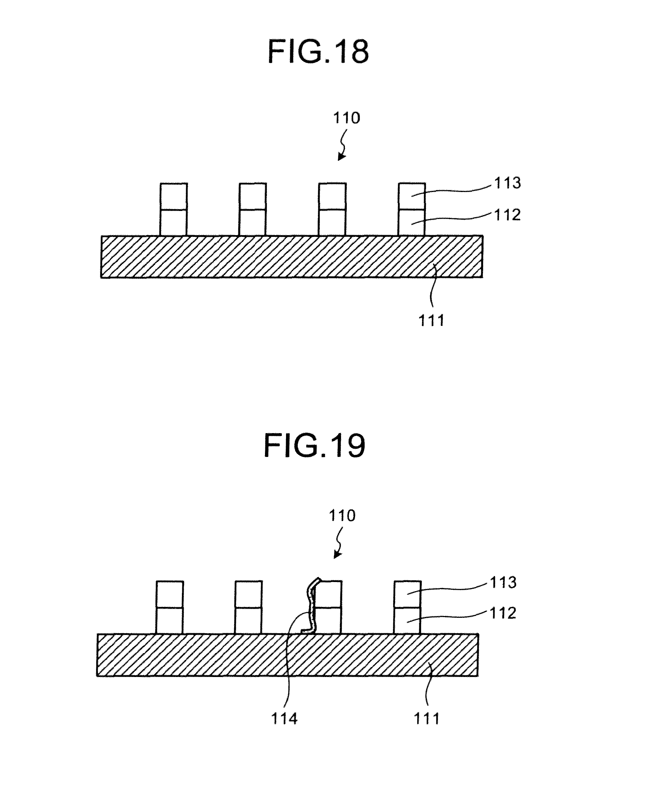

This sensor is referred to as "atmospheric corrosion monitor" or "ACM corrosion sensor".

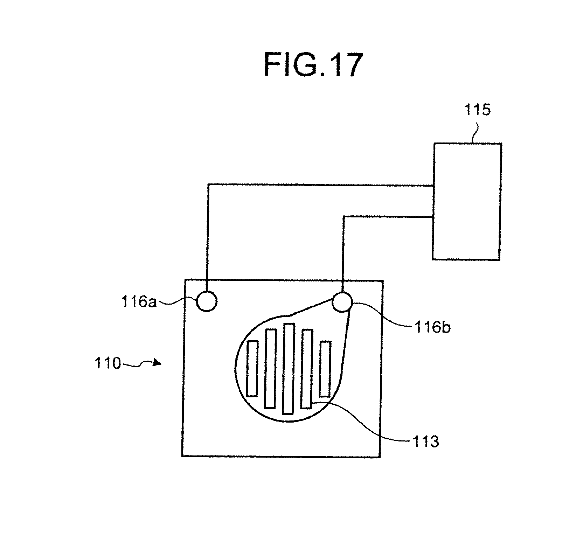

FIGS. 17, 18, and 19 depict an example of this sensor. As shown in FIGS. 17 to 19, an ACM corrosion sensor (hereinafter, "the corrosion sensor") 110 includes a substrate 111 obtained by cutting down a carbon steel plate having a thickness of 0.8 millimeter into 64 mm x 64 mm, an insulating unit 112 of an insulating paste (thickness of 30 to 35 micrometers) was coated on this substrate 111 using a thick-film IC precision screen printer and hardened.
Next, a conductive paste (thickness of 30 to 40 micrometers, filler: Ag) is laminated and printed on a pattern of the insulating unit 112 so as to keep insulation from the substrate 111, and hardened to form conductive units 113, thereby constituting the corrosion sensor (Non patent Literature 3).
Furthermore, as shown in FIG. 19, a water film 114 due to humidity, sea salt (chloride ions or the like) or the like short-circuits the conductive units 113 to the substrate 111, and an ammeter 115 measures a corrosion current of a galvanic pair of Fe-Ag. Reference signs 116a and 116b denote a terminal.

Further, there is also proposed a method of predicting an amount of salt-damage-caused corrosion of a solar photovoltaic power system member using the ACM corrosion sensor described above, and also proposed estimating a sea salt adhesion amount based on a relational chart representing a relationship among humidity, a measured current value, and the salt water adhesion amount (Non Patent Literature 4).

### Citation List

### Patent Literature

Patent Literature 1: Japanese Patent Application Laid-open No. 2008-157647 Non Patent Literature

Non Patent Literature 1: JIS Z2371
Non Patent Literature 2: JIS K5621
Non Patent Literature 3:
   http://www.nims.go.jp/mdss/corrosion/ACM/ACM1.htm
Non Patent Literature 4: Matsushita Technical Journal (Nov. 2002) p79-85

### Summary

### Technical Problem

However, the JIS Z2371 standard test and JIS K5621 standard test have a of poor testing accuracy or non-coincidence between its testing environment and environment.

Furthermore, the conventional techniques have the following problem. Although it is possible to estimate a degree of corrosion from the corrosion current using the ACM corrosion sensor, because almost all of materials of constituent members constituting the outdoor structure are coated, it is not possible to appropriately determine the degrees of corrosion according to statuses of individual coating films (such as types, thicknesses and the like of the coating films).

That is, in a case of a windmill or the like as an example of the outdoor structure, external air is introduced into the windmill to prevent heat emission inside thereof, and it is desired to accurately ascertain maintenance timings of members or components according to a site environment with due consideration to a probability that sea salt accompanies the external air.

In view of the above problems, an object of the present invention is to provide an outdoor structure and a method of estimating deterioration of a constituent member of an outside structure that can accurately determine a degree of corrosion according to an installation environment.

### Solution to Problem

According to an aspect of the present invention, in an outdoor structure comprising a corrosion sensor that detects a corrosion current, the corrosion sensor being provided in at least one portion of an outer surface of the outdoor structure exposed to an external air environment, a substrate of the corrosion sensor is made of a material identical to a material of each of constituent members of a structure, and a coating film is provided to cover a plurality of conductive units provided on a surface of a substrate of a corrosion sensor via insulating units, respectively with the coating film, and is applied entirely onto a surface of the structure, the coating film being identical to a coating film applied onto each of the constituent elements.

Advantageously, in the outdoor structure, an ultraviolet ray is irradiated onto the corrosion sensor from an ultraviolet lamp.

Advantageously, in the outdoor structure, the corrosion sensor is located in a dent portion of a bowl unit provided on an outer surface of a structure in a horizontal state, and the coating film is provided to cover the conductive units with the coating film and applied entirely onto a conical surface and a surface of the structure.

Advantageously, in the outdoor structure, the outdoor structure is a wind power generator.

According to another aspect of the present invention, in a method of estimating deterioration of a constituent member of an outside structure, the outside structure comprising a corrosion that detects a corrosion current, the corrosion sensor being provided in at least one portion of an outer surface of the outdoor structure exposed to an external air environment, a substrate of the corrosion sensor is made of a material identical to a material of each of constituent members of a structure. The method comprises: covering a plurality of conductive units provided on a surface of a substrate of a corrosion sensor via insulating units, respectively with a coating film, and applying the coating film entirely onto a surface of the structure, the coating film being identical to a coating film applied onto the constituent member; and estimating a deterioration degree of each constituent member by deterioration due to a temporal change.

Advantageously, in the method of estimating deterioration of a constituent member of an outside structure, a deterioration degree is estimated in advance by a deterioration acceleration test.

According to still another aspect of the present invention, a method of monitoring a life of a constituent member of an outdoor structure, the method being for monitoring a life of the constituent member of a structure exposed to an external air environment by a corrosion current using a corrosion sensor, the corrosion sensor being provided in at least one portion of the structure and detecting the corrosion current indicating salt damage information. A substrate of the corrosion sensor is made of a material identical to a material of each of constituent member of a structure, a first corrosion sensor and a second corrosion sensor are used for the method. A coating film is provided to cover a plurality of conductive units provided on a surface of the substrate of the first corrosion sensor via insulating units, respectively with the coating film, and is applied entirely onto a surface of the structure, the coating film being identical to a coating film applied onto each of the constituent elements, and the coating film is not applied onto the second corrosion sensor differently from the first corrosion sensor. The method comprises: causing the first corrosion sensor to measure a quantity of corrosion electricity at an end of a life by a time the corrosion current is detected; causing the second corrosion sensor to measure an accumulated quantity of electricity of the corrosion current; and issuing a warning when a total quantity of electricity measured by the corrosion sensor exceeds a value of a quantity of corrosion electricity at an end of the life.

Advantageously, in the method of monitoring a life of a constituent member of an outdoor structure, when a current equal to or higher than a predetermined current value is detected measuring a quantity of electricity of the corrosion current using the second corrosion sensor, then it is determined that the current corresponds to a time for which the outdoor structure becomes wet with rain, and this quantity of electricity corresponding to the time for which the outdoor structure becomes wet with rain is to be excluded from the total quantity of electricity.

Advantageously, in the method of monitoring a life of a constituent member of an outdoor structure, when a current equal to or higher than a predetermined current value is when measuring a total quantity of electricity of the corrosion current using the second corrosion sensor, then it is determined that the current corresponds to a time for which the outdoor structure becomes wet with rain, and this quantity of electricity corresponding to the time for which the outdoor structure becomes wet with rain is to be excluded from the total quantity of electricity, and the structure is dehumidified.

According to still another aspect of the present invention, an outdoor structure comprising an ion counter being provided in at least one portion of a structure exposed to an external air environment and detecting information on ions resulting in salt damage. The ion counter includes: a rainwater collection chamber that temporarily collects rainwater; and an ion electrode that is provided in the rainwater collection chamber and analyzes ions.

According to still another aspect of the present invention, an outdoor structure comprising an ion counter being provided in at least one portion of a structure exposed to an external air environment and detecting information on ions resulting in salt damage. The ion counter includes: a rainwater collection chamber that temporarily collects rainwater; and an ion chromatograph that is provided in the rainwater collection chamber and analyzes ions.

According to still another aspect of the present invention, in an outdoor structure comprising an ion counter being provided in at least one portion of a structure exposed to an external air environment and detecting information on ions resulting in salt damage, the ion counter measures ions by measurement.

Advantageously, in the outdoor structure comprising a rainwater capturing unit, the rainwater capturing unit is provided in an upper portion of the rainwater collection chamber, and the rainwater capturing unit drops failing rainwater into the rainwater collection chamber from a bowl unit that collects rainwater containing a corrosive factor in a dent portion of a conical center and a hole that communicates with the dent portion.

Advantageously, in the outdoor structure, a coating film identical to a coating film applied onto a surface of of constituent elements of a structure is applied onto a conical surface of the bowl unit.

Advantageously, in the outdoor structure, the outdoor structure is a wind power generator.

### Advantageous Effects of Invention

According to the present invention, a corrosive factor such as sea salt or rainwater acts to cause a temporal change in an outdoor structure to generate cracks or the like in a coating film identical to that applied onto each constituent member, a deteriorated portion is formed, rainwater enters, and a corrosion current flows, thereby making it possible to determine a deterioration degree of the coating film of each constituent member. As a result, it is possible to individually evaluate materials or coating materials according to the individual materials of the constituent members of the outdoor structure.

Furthermore, it is possible to promptly determine the deterioration degree of each constituent member by the total quantity of electricity of the corrosion current due to the temporal change caused by an action of the corrosive factor such as sea salt or rainwater. It is thereby possible to take measures to suppress the deterioration.

Further, the temporal change caused by an action of the corrosive factor such as sea salt or rainwater can be promptly subjected to ion analysis at a site of an installation location of an outdoor structure. In addition, by applying a coating film identical to that applied onto each constituent member, it is possible to individually determine deterioration degrees of the respective constituent members.

### Brief Description of Drawings

FIG. 1 is a schematic diagram of a corrosion sensor according to a first embodiment.
FIG. 2 is a schematic diagram of the corrosion sensor at the time of corrosion.
FIG. 3 is a plan view of the corrosion sensor according to the first embodiment.
FIG. 4 is a schematic diagram of a wind power generator as an example of an outdoor structure.
FIG. 5 is a schematic diagram of a corrosion sensor according to a second embodiment.
FIG. 6 is a schematic diagram of another corrosion sensor according to the second embodiment.
FIG. 7A is a plan view of a first corrosion sensor according to a third embodiment.
FIG. 7B is a plan view of a second corrosion sensor according to the third embodiment.
FIG. 8 is a schematic diagram of the second corrosion sensor according to the third embodiment.
FIG. 9 is a schematic diagram of the second corrosion sensor according to the third embodiment at the time of corrosion.
FIG. 10 is a schematic diagram of a wind power generator as an example of the outdoor structure.
FIG. 11 is a schematic diagram of another wind power generator as an example of the outdoor structure.
FIG. 12 is a schematic diagram of an ion counter according to a fourth embodiment.
FIG. 13 is a schematic diagram of a wind power generator according to the fourth embodiment as an example of the outdoor structure.
FIG. 14 is a schematic diagram of an ion counter according to a fifth embodiment.
FIG. 15 is a schematic diagram of a wind power generator according to the fifth embodiment as an example of the outdoor structure.
FIG. 16 is a schematic diagram of an ion counter according to a sixth embodiment.
FIG. 17 is a plan view of a corrosion sensor according to a conventional technique.
FIG. 18 is a schematic diagram of the corrosion sensor according to the conventional technique.
FIG. 19 is a schematic diagram of the corrosion sensor according to the conventional technique at the time of corrosion.

### Description of Embodiments

The present invention will be explained below in detail with reference to the accompanying drawings. The invention is not limited to the hollowing embodiments. In addition, constituent elements in the following embodiments include that can be easily assumed by persons skilled in the art or that are substantially equivalent.

### First embodiment

An outdoor structure according to a first embodiment of the present invention is described with reference to the drawings.

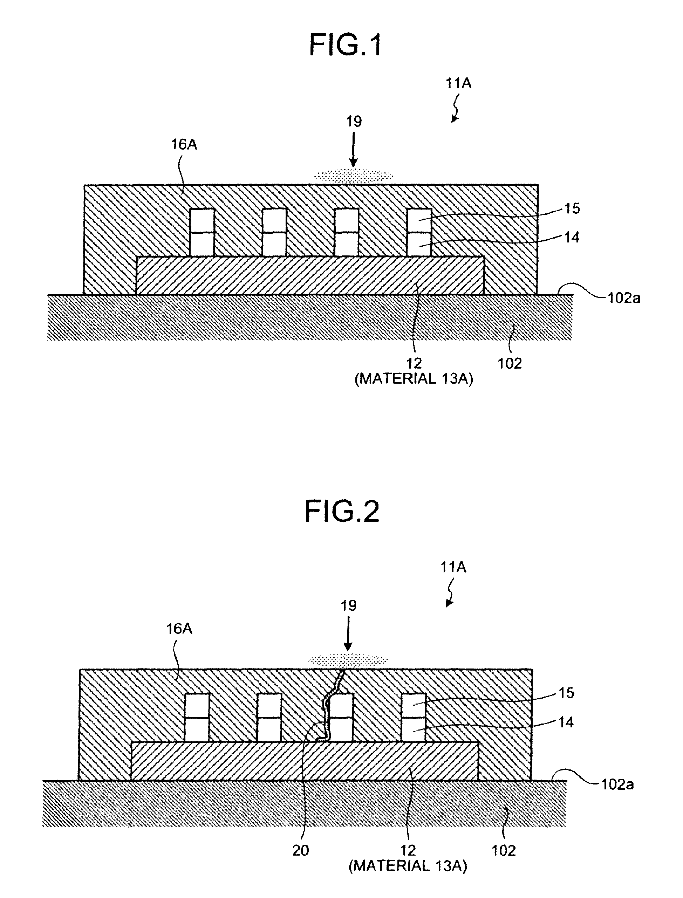

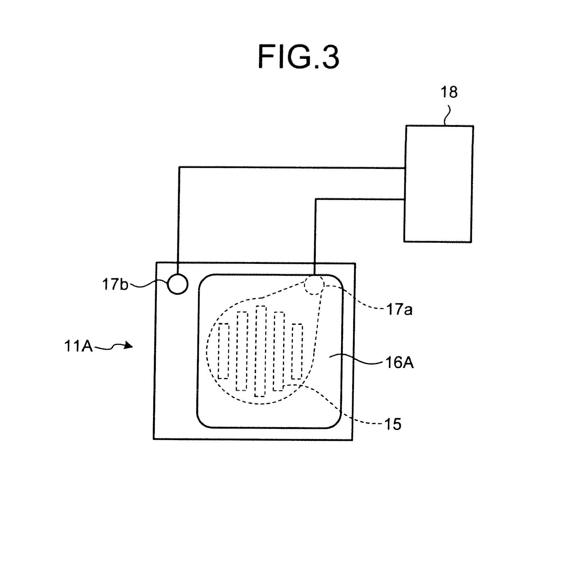

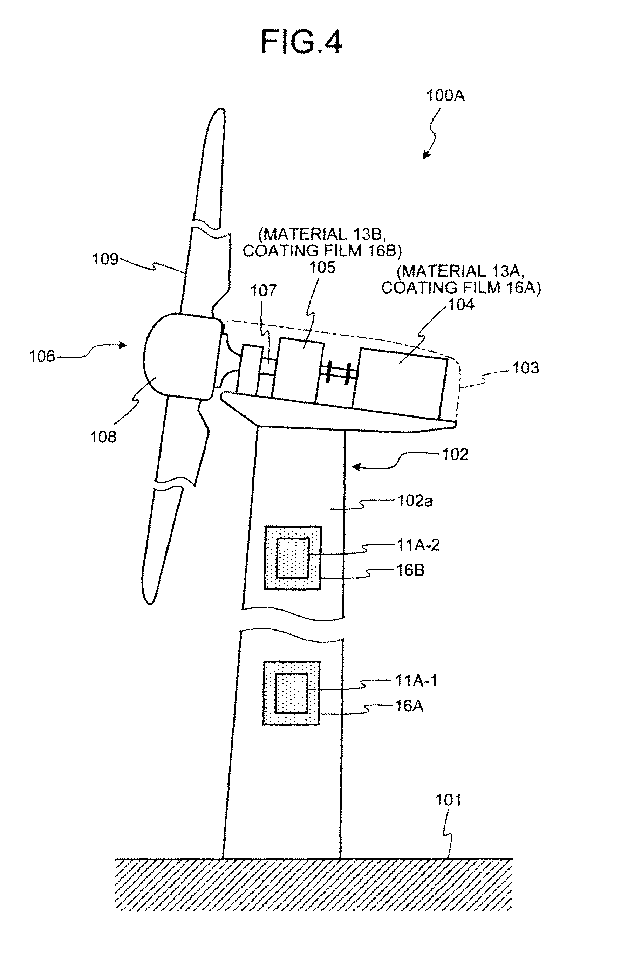

FIG. 1 is a schematic diagram of a corrosion sensor according to the first embodiment. FIG. 2 is a schematic diagram of the corrosion sensor at the time of corrosion. FIG. 3 is a plan view of the corrosion sensor according to the first embodiment. FIG. 4 is a schematic diagram of a wind power generator as an example of the outdoor structure.
As shown in these drawings, a corrosion sensor 11A according to the present embodiment is configured so that a substrate 12 is made of a material 13A, 13B, ... identical to a material of each constituent member (such as a generator 104) of the structure such as a wind power generator 100A (see FIG. 4), and so that a coating film 16A identical to the coating film 16A applied onto the constituent member (such as the generator 104) is used to cover a plurality of conductive units 15 provided on a surface of the substrate 12 of the corrosion sensor 11 via insulating units 14, respectively, with the coating film 16A, and the coating film 16A is applied entirely onto an outer surface 102a of a tower 102 of the wind power generator 100. In this case, a plurality of conductive units 15 are provided on the coating film of the substrate 12 at predetermined intervals and designed to be almost linear.

The wind power generator 100A shown in FIG. 4 is described below. As shown in FIG. 4, the wind power generator 100A includes the tower 102 installed on, for example, a ground 101 and a nacelle 103 provided on an upper end of the tower 102. The nacelle 103 is revolvable in a yaw direction and oriented to a desired direction by a nacelle revolving mechanism (not shown). The generator 104 and a speed-up gear 105 are intro the nacelle 103. A rotor of the generator 104 is connected to a main shaft 107 of a windmill rotor 106 via the speed-up gear 105. The windmill rotor 106 includes a hub 108 connected to the main shaft 107 and blades 109 attached to the hub 108.
In the present embodiment, the material of the generator 104 is denoted by 13A, the coating film of the material 13A is denoted by 16A, the material of the speed-up gear 105 is denoted by 13B, and the coating film of the material 13B is denoted by 16B.

FIG. 4 is a specific example of installation of a corrosion sensor 11A-1 of this type to the wind power generator. As shown in FIG. 4, the corrosion sensor 11A-1 is installed on a surface of the tower 102 and the coating film 16A of, for example, a generator 104A is applied to cover a surface of the corrosion sensor 11A-1 with the coating film 16A.
Furthermore, a corrosion sensor 11A-2 is installed on the surface of the tower 102 and the coating film 16B of, for example, the speed-up gear 105 is applied to cover a surface of the corrosion sensor 11A-2 with the coating film 16B.

As a result of exposure to the external air, a corrosive factor 19 such as sea salt or rainwater acts to cause a temporal change in the wind power generator 100A to generate cracks or the like in the coating film 16A or 16B, thereby forming a deteriorated portion 20. Rainwater enters into this deteriorated portion 20 to short-circuit the conductive units 15 to the substrate 12, a corrosion current flows, and an ammeter 18 measures the corrosion current, thereby making it possible to determine deterioration. Reference signs 17a and 17b denote a terminal, respectively.

In this manner, in a period until the corrosion current is detected, it is possible to independently evaluate materials and coating films according to individual materials of constituent members of the wind power generator 100A that is the structure. Therefore, by preparing sensors applied with the coating films 16A, 16B, ... corresponding to the respective constituent members, it is possible to determine deterioration degrees of the coating films 16A, 16B, ... of the respective constituent members.
As a result, it is possible to make a structure construction plan and a maintenance operation plan for the structure.

Moreover, a method of estimating deterioration of a constituent member of an outdoor structure according to the present invention includes applying the coating film 16A identical to the coating film 16A applied onto the material 13A and estimating a deterioration degree of each of the constituent members according to deterioration due to the temporal change using the corrosion sensor 11A.
Using a result of this estimation, it is possible to make a structure construction plan and a maintenance operation plan for the structure.

### Second embodiment

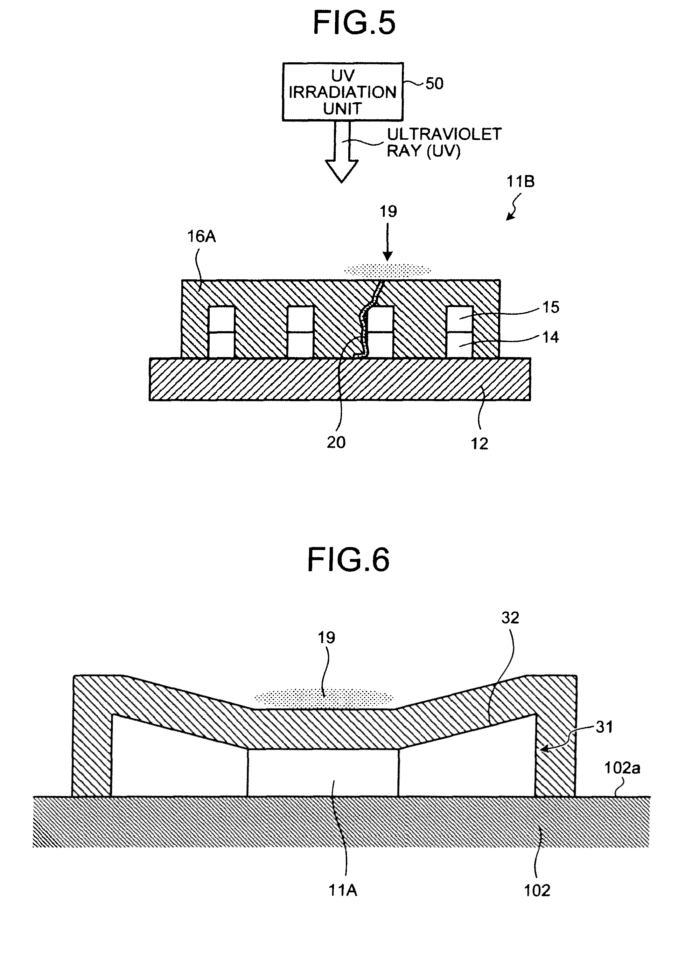

A second embodiment of the present invention is described with reference to the drawings. FIG. 5 is a schematic diagram of a corrosion sensor according to the second embodiment. As shown in FIG. 5, a corrosion sensor 11B according to the present embodiment is to irradiate ultraviolet (UV) rays from a UV irradiation unit 50 onto a surface with the coating film 16A, and to conduct an acceleration test.

Generally, when a coating material is irradiated with UV rays, then a network of organic bonds of resin is cut off and deterioration accelerates. This thereby makes it possible to determine a deterioration degree of the coating film.

An ordinary coating material deterioration acceleration test is a test of exposure of a coating material to UV rays in an environment free from such external factors as the sea salt. On the other hand, the deterioration acceleration test according to the present invention can be conducted according to an actual environment on a site where the outdoor structure is located. Therefore, it is possible to determine the deterioration degree with higher accuracy.

FIG. 6 is an example of another deterioration acceleration test. The corrosion sensor 11A is installed in a conical portion 32 of a bowl body 31 located in a horizontal portion of the structure, and a plurality of conductive units 15 are covered with the coating film 16A and the coating film 16A is applied entirely on a surface of the conical portion 32 and a surface of the structure.

As a result, there occurs a state where the corrosive factor 19 always remains near a dent portion of the conical portion 32 (particularly a state where Na ions, Mg ions and the like that are sea salt components are concentrated). Therefore, corrosion of the coating film 16A advances.

This accelerates deterioration of the coating film 16A.
Accordingly, it is possible to determine deterioration degrees of the coating films 16A, 16B, ... of the respective constituent members by preparing sensors applied with the coating films 16A, 16B, ... corresponding to the respective constituent members.

The present embodiment has been described while referring to, for example, a wind power generator as the outdoor structure according to the invention. However, the invention is not limited thereto, and can be also applied to a structure for which it is necessary to take measures against salt damage on a coast or the like such as bridge equipment or a solar battery device. In addition, the present invention is also applicable to measures against salt damage for a moving unit such as a vehicle or a ship.

### Third embodiment

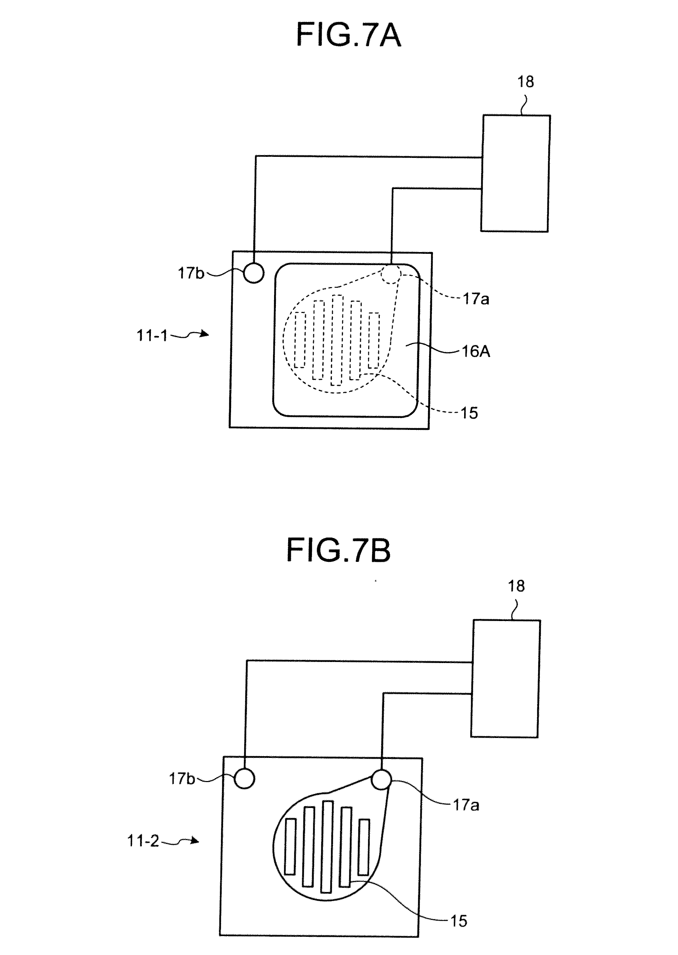

A method of monitoring a life of a constituent member of an outdoor structure according to a third embodiment of the present invention is described with reference to the drawings.
In the third embodiment, the corrosion sensor described in the first embodiment is used, and because it is the same as that shown in FIGS. 1 to 3 described above, explanations thereof will be omitted. FIG. 7A is a plan view of a first corrosion sensor according to the third embodiment and the first corrosion sensor is denoted by 11-1 in FIG. 7A.

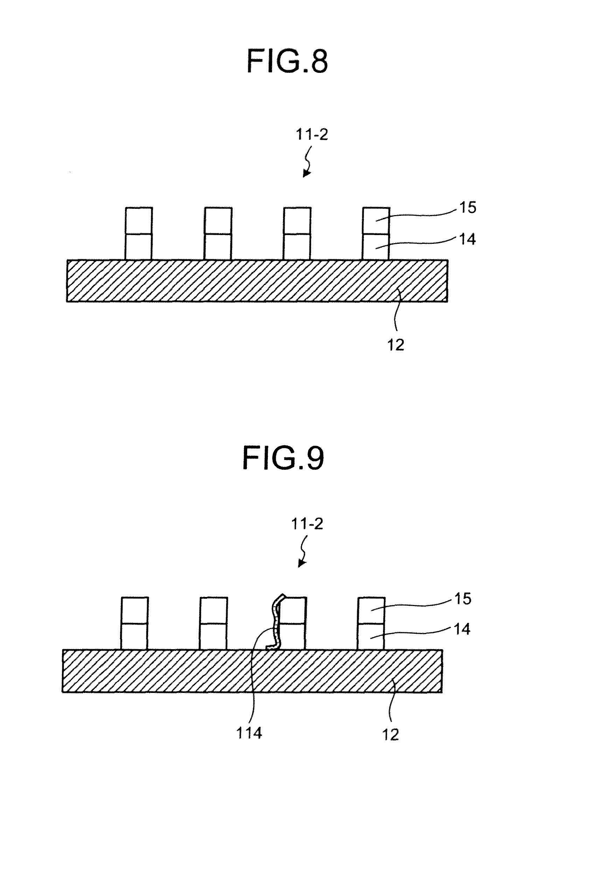

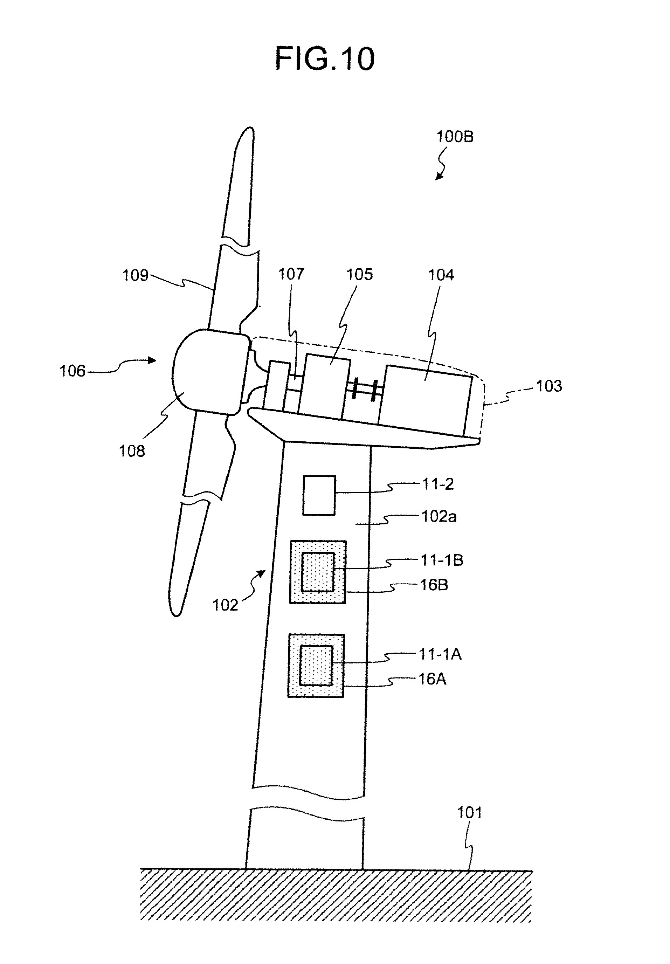

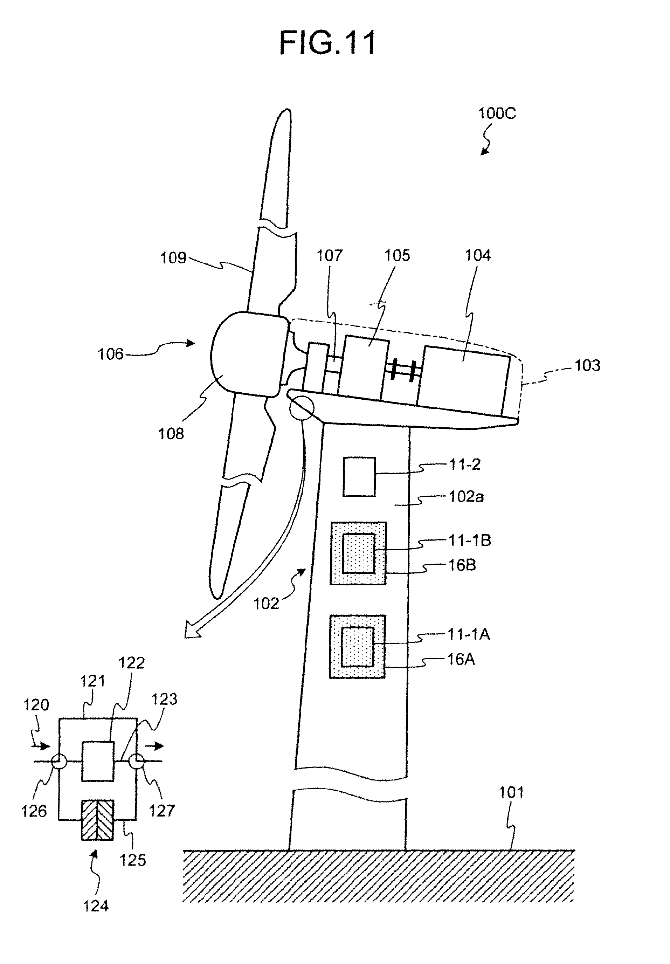

FIG. 7B is a plan view of a second corrosion sensor according to the third embodiment. FIG. 8 is a schematic diagram of the second corrosion sensor according to the present embodiment. FIG. 9 is a schematic diagram of the second corrosion sensor at the time of corrosion. FIGS. 10 and 11 are schematic diagrams of a wind power generator as an example of the outdoor structure.

As shown in these drawings, the first corrosion sensor 11-1 according to the present embodiment is configured so that the substrate 12 is made of the material 13A, 13B, ... identical to a material of each constituent member (such as the generator 104) of the structure such as a wind power generator, and so that the coating film 16A identical to the coating film 16A applied onto the constituent member (such as the generator 104) is used to cover a plurality of conductive units 15 provided on a surface of the substrate 12 of the corrosion sensor 11 via the insulating units 14, respectively, with the coating film 16A, and the coating film 16A is applied entirely on the outer surface 102a of the tower 102 of the wind power generator.

On the other hand, as shown in FIGS. 7 to 9, a sensor according to the conventional technique, onto which the coating film 16A is not applied, is used as a second corrosion sensor 11-2 according to the present embodiment, differently from the first corrosion sensor 11-1.

FIG. 10 is a specific example of installation of the first corrosion censor 11-1 and the second corrosion sensor 11-2 as described above to a wind power generator 100B.

Because the wind power generator 100B shown in FIG. 10 is identical in configuration to the wind power generator 100A shown in FIG. 4, like members are denoted by like reference signs and explanations thereof will be omitted.
As shown in FIG. 10, first corrosion sensors 11-1A and 11-1B and the second corrosion sensor 11-2 are installed to be proximate to one another on the surface of the tower 102.

Moreover, as a result of exposure to the external air, the corrosive factor 19 such as sea salt or rainwater acts to cause a temporal change in the wind power generator 100B to generate cracks or the like in the coating film 16A or 16B, thereby forming the deteriorated portion 20 in, for example, the coating film 16A. Rainwater enters into the deteriorated portion 20 to short-circuit the conductive units 15 to the substrate 12, corrosion current flows, and the ammeter 18 measures the corrosion current, thereby making it possible to determine deterioration.

Furthermore, an accumulated quantity of corrosion-caused (corrosion) electricity (coulomb: Cmax) at the end of a life (t max) by the time the corrosion current is detected on the substrate 12 made of the material 13A is measured using the first corrosion sensor 11-1A. With this configuration, it is possible to predict a corrosion life of the generator 104 made of the material 13A from the coating film 16A. While this test is conducted in advance, a deterioration acceleration test using, for example, a UV ray irradiation unit can be conducted as this test.

Moreover, an accumulated quantity of electricity (coulomb) of the corrosion current due to the temporal change is measured using the second corrosion sensor 11-2. If a total quantity of electricity (X) measured by the second corrosion sensor 11-2 exceeds the quantity of corrosion electricity (coulomb: Cmax) at the end of the life (t max), it suffices to determine that the generator 104 comes to the end of the life, to issue a predetermined warning, and to take measures against this.
The predetermined warning is, for example, an instruction or the like to switch over a ventilation system, to use a salt water prevention film or the like, or to dehumidify an interior of a device.

For example, to monitor whether salt water adheres onto the device, it suffices to issue an instruction to reduce a ratio of closure or opening of an air induction unit or an instruction to switch over to a salt damage film when sea salt enters into the device.

Moreover, to monitor an accumulated value of the corrosion current, an instruction necessary to components, an instruction to adjust a maintenance frequency or the like is issued if there is a probability of corrosion.

With this configuration, it is possible to monitor the life of each of the constituent members of, for example, the wind power generator.

Further, when a current equal to or higher than a predetermined current value (for example, 1 microampere) is detected when measuring the quantity of electricity (X) of the corrosion current using the second corrosion sensor 11-2, it suffices to determine that the current corresponds to time for which the device becomes wet with rain and to exclude this quantity of electricity corresponding to the time for which the device becomes wet with rain from the total quantity of electricity.

Generally, when the corrosion current caused by the sea salt or the like and lower than 1 microampere is measured, it is determined that the corrosion current results from adhesion of the sea salt or the like. On the other hand, when the corrosion current is equal to or higher than 1 microampere, the corresponding quantity of electricity is excluded from the accumulated quantity of electricity.
In this manner, for determination of adhesion of the sea salt or the like, it is possible to ensure determining an adhesion amount of the sea salt by excluding the high current value resulting from the fact that the device becomes wet with rain from the accumulated quantity of electricity.

Furthermore, when it is determined that the outdoor structure becomes wet with rain, it suffices to determine that a corrosion factor due to the wet with rain is high for the outdoor structure and to dehumidify the outdoor structure.

To monitor the wet, it suffices to issue an instruction to reduce the ratio of closure or opening of the air induction unit or an instruction to dehumidify the interior of the device when it is determined that the device is wet.
If the device is not wet, it suffices to issue an ordinary ventilation instruction.

In a wind power generator 100C shown in FIG. 11, for example, an air induction portion (not shown) into which external air 120 is introduced from the outside is located so as to radiate heat from an interior of the nacelle 103 as shown in an extracted and enlarged pattern diagram of an air induction path.
It can be predicted that, when the air is introduced inside through a simple opening path 121 or a neutral filter path 123 via a neutral filter 122 at the time of this air induction, the salt water accompanies the rainwater.

Therefore, as shown in the extracted and enlarged pattern diagram of the path of FIG. 11, a channel is switched over to a sea salt filter path 125 having a sea salt filter 124 interposed therein to prevent internal corrosion as measures against the sea salt. In FIG. 11, reference signs 126 and 127 denote a switching unit.

In this case, particle diameters of sea salt particles generally have two peaks including a peak equal to or smaller than 1.0 micrometer and a peak near 5 micrometers and the particle diameters of about 70% of all the sea salt particles fall in a particle diameter range between 2.0 and 7.0 micrometers. Therefore, a filtering material can easily capture the sea salt particles.
Moreover, the sea salt filter is configured so that a salt absorbing layer having strong water-absorbing power, a layer having repellency, and the like are layered, and so that, even if deliquescence occurs to under high humidity conditions, the layer having the repellency can prevent liquid salt from spreading in the form of a film but makes the liquefied salt present as droplets, thereby suppressing pressure loss from rising. At the same time, the salt absorbing layer absorbs and retains the droplets, so that it is possible to prevent the droplets from re-scattering toward a downstream side (inside).

In this manner, in the method of monitoring the life of each of the constituent members of the outdoor structure according to the present invention, the coating film 16A ... or the like identical to the coating film 16A ... or the like applied onto the material 13A ... or the like is applied, a deterioration degree of each constituent member is determined by deterioration due to a temporal change, and the deterioration of each member can be monitored based on this determination using the first corrosion sensor 11-1 corresponding to each of the constituent members.

Furthermore, when it is monitored that the outdoor structure is wet, the switching units 126 and 127 are switched to switch over the channel to the sea salt filter path 125 having the sea salt filter 124 so as to prevent introduction of the sea salt accompanying the rainwater as shown in FIG. 11, thereby making it possible to prevent the outdoor structure from the sea salt damage.

Moreover, when no filters are used, it suffices to close the path or to reduce an air intake amount to prevent the outdoor structure from the salt damage as much as possible.

It is thereby possible to protect the interior of the structure from the salt damage and establish a structure construction plan and a maintenance operation plan for the structure.

The present embodiment has been described above while referring to, for example, a wind power generator as the outdoor structure according to the present invention. However, the present invention is not limited thereto, and can be also applied to a structure for which it is necessary to take measures against salt damage on a coast or the like such as bridge equipment or a solar battery device. In addition, the present invention is also applicable to measures against salt damage for a moving unit such as a vehicle or a ship.

### Fourth embodiment

An outdoor structure according to a fourth embodiment of the present invention is described with reference to the drawings.

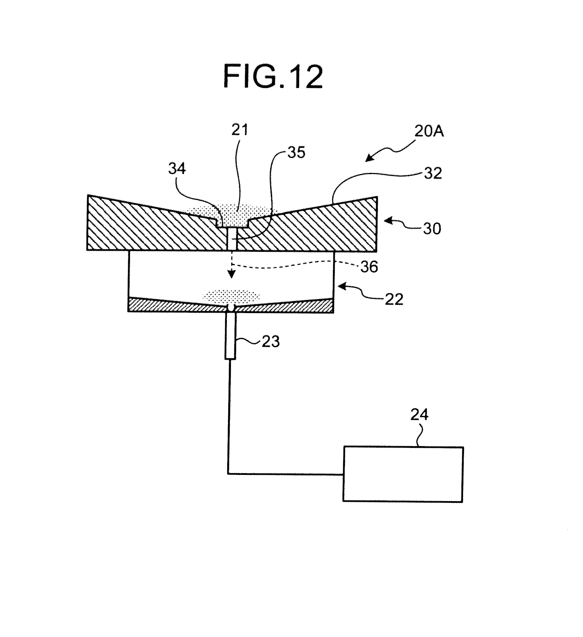

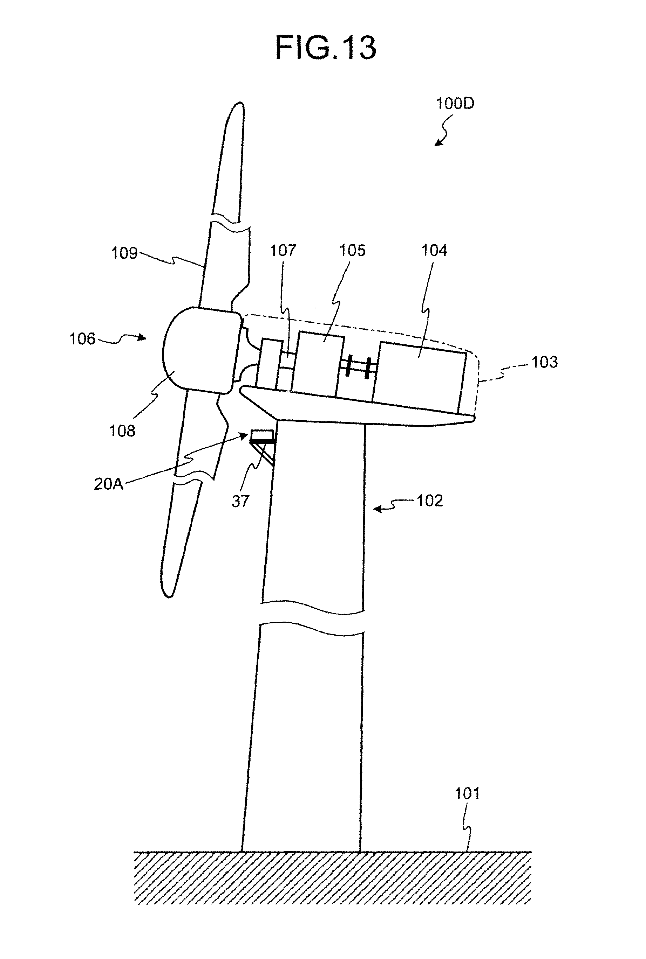

FIG. 12 is a schematic diagram of an ion counter according to the fourth embodiment. FIG. 13 is a schematic diagram of a wind power generator as an example of the outdoor structure.
As shown in these drawings, an ion counter 20A according to the present embodiment is provided in at least one portion of the structure (such as the wind power generator) exposed to an external air environment, and is to detect information on ions resulting in, for example, salt damage. The ion counter 20A includes a rainwater collection chamber 22 that temporarily collects rainwater 21 or the like containing a corrosive factor, and an ion electrode 23 provided in the rainwater collection chamber 22 and analyzing ions. In this case, a bottom of the rainwater collection chamber 22 is tapered so that the rainwater 21 containing a corrosive factor is gathered at the ion electrode 23. Reference sign 24 denotes an ion meter that measures ion information from the ion electrode.

In the present embodiment, a rainwater capturing unit 30 that captures the rainwater or the like is further provided in an upper portion of the rainwater collection chamber 22.
The rainwater capturing unit 30 is provided in the upper portion of the rainwater collection chamber 22, and drops falling rainwater 36 into the rainwater collection chamber 22 from the conical portion 32 that collects the rainwater 21 containing a corrosive factor in a bottom 34 thereof and a hole 35 communicating with the bottom 34.

In a case of ion measurement, it suffices to appropriately set the ion counter 20A at predetermined time intervals, during rain or the like.
Furthermore, when no water is present at the time of measurement, it suffices to spray pure water onto a surface of the conical portion 32 and to collect the water.

The ion electrode 23 measures information on ions (cations or anions) in the falling rainwater 36 dropped into the rainwater collection chamber 22 and containing the corrosive factor.
In this case, examples of the information on ions in the failing rainwater 36 containing the corrosive factor include, as cations, Fe ions, Cu ions, Al ions, Na ions, Mg ions, Cr ions, and Ni ions.
Examples of the information on ions include, as anions, Cl ions, OH ions, SO₄ ions, and SO₃ ions.

Alternatively, an ion chromatograph can be used to subject ion components to a column separation and to analyze the ions as a chromatogram in place of the ion measurement by the ion electrode.
Because a wind power generator 100D shown in FIG. 13 is identical in configuration to the wind power generator 100A shown in FIG. 4, like members are denoted by like reference signs and explanations thereof will be omitted.
FIG. 13 depicts specific installation statuses of the ion counter. As shown in FIG. 13, the ion counter 20A is located horizontally via a horizontal support unit 37 of the tower 102.

Furthermore, as a result of exposure to the external air, the rainwater 21 containing a corrosive factor such as the rainwater enters, as the failing rainwater 36, into the rainwater collection chamber 22, the ion electrode 23 measures the ion information on the rainwater 21, and the ion meter 24 detects the ion information.
It is thereby possible to constantly and accurately ascertain temporal change situations.
That is, because the rainwater capturing unit 30 captures the rainwater 21 containing a corrosive factor and the rainwater 21 is collected into the rainwater collection chamber 22 from a hole 33, it is possible to efficiently collect the corrosive factor such as dust or sea salt as well as the rainwater.

As a result, it is possible to deal with situations according to the temporal change and promptly establish a maintenance operation plan.

### Fifth embodiment

An outdoor structure according to a fifth embodiment of the present invention is described with reference to the drawings.

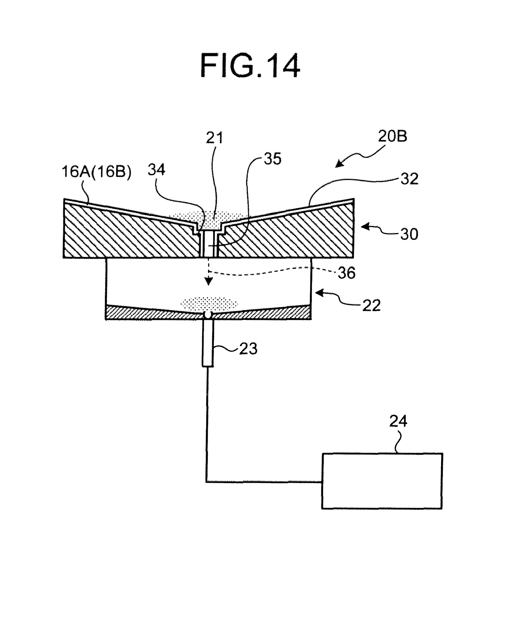

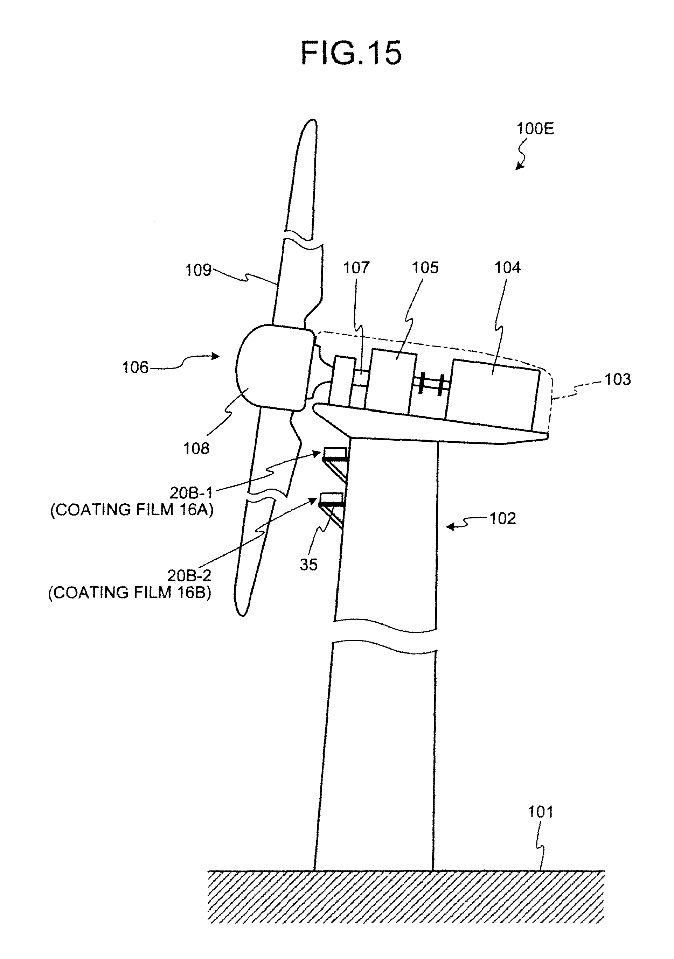

FIG. 14 is a schematic diagram of an ion counter according to the fifth embodiment. FIG. 15 is a schematic diagram of a wind power generator as an example of the outdoor structure. Because a wind power generator 100E shown in FIG. 15 is identical in configuration to the wind power generator 100A shown in FIG. 4, like members are denoted by like reference signs and explanations thereof will be omitted.
An ion counter 20B according to the present embodiment is configured, as compared with the ion counter 20A according to the fourth embodiment, so that the coating film 16A is applied onto a conical surface of the conical portion 32 and the hole 33.
This coating film is to apply a coating material applied onto a generator of, for example, the wind power generator serving as the outdoor structure.
In the present embodiment, the coating film of the generator 104 of the wind power generator 100E is denoted by 16B and the coating film of the speed-up gear 105 is denoted by 16B.
The material of the conical portion 32 is assumed as stainless steel to detect iron ions.

FIG. 15 depicts specific installation statuses of the ion counters. As shown in FIG. 15, ion counters 20B-1 (the coating film 16A) and 20B-2 (the coating film 16B) are located horizontally via the horizontal support units 37 of the tower 102, respectively.

Furthermore, when cracks or the like are generated in one of or each of the coating films 16A and 16B and a deteriorated portion is formed by deterioration due to a temporal change, iron ions of the conical surface permeates the rainwater 21 containing a corrosive factor from this deteriorated portion. The ion electrode 23 measures the ions, thereby making it possible to determine the deterioration.

That is, before the deterioration occurs, the bowl unit and the hole are protected by the coating film and the iron ions that are the constituent material of the bowl unit are not detected accordingly. However, when the deterioration occurs, the iron ions permeate the rainwater 21 containing a corrosive factor and deterioration of the coating film can be determined.

While the conical portion 32 is made of stainless steel and the iron ions are detected in the present embodiment, the present invention is not limited to the present embodiment. When the conical portion 32 is not made of stainless steel, it suffices that a material containing specific ions that are not measured by measuring the corrosive factor is applied as a base layer in advance before a coating film 36A is applied on the surface of the conical portion 32 and the hole 33, the specific ions are caused to permeate from this base layer due to the deterioration, and that the ion meter 24 detects the specific ions.

In this manner, it is possible to individual evaluate coating materials. Therefore, by preparing ion counters applied with the coating films 16A, 16B, ... corresponding to the respective constituent members, it is possible to determine deterioration degrees of the coating films 16A, 16B, ... and the like of the respective constituent elements.
As a result, it is possible to establish a structure construction plan and a maintenance operation plan for the structure.

### Sixth embodiment

An outdoor structure according to a sixth embodiment of the present invention is described with reference to the drawings.

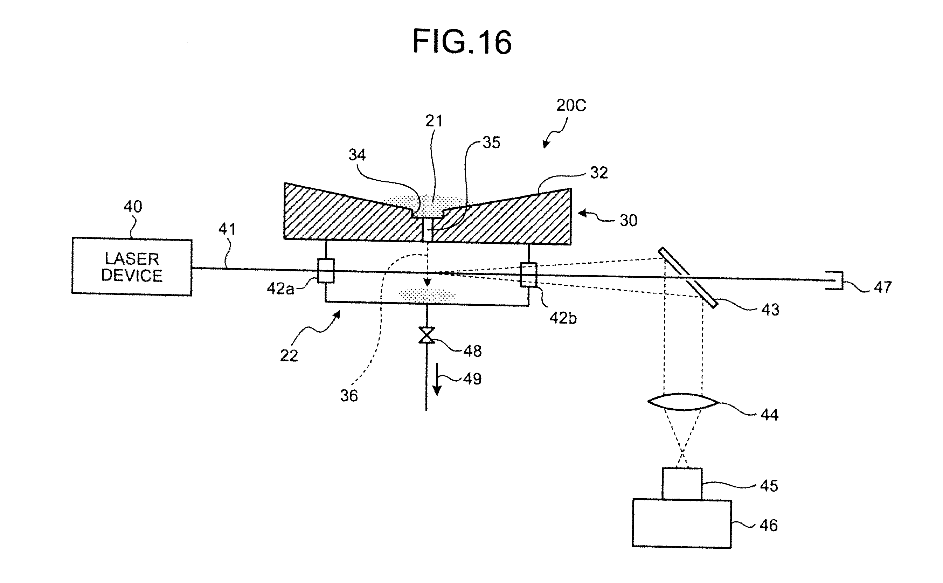

FIG. 16 is a schematic diagram of an ion counter according to the sixth embodiment.
A laser-based ion counter 20C includes a laser device 40 that irradiates a laser beam 41 into the rainwater collection chamber 22 of the rainwater capturing unit 30. The ion counter 20C is configured to introduce luminous information generated by the laser beam 41 irradiated onto the falling rainwater 36 via a mirror 43 and a lens 44, and to detect the luminous information using a CCD (Charge Coupled Device) camera 46.
In FIG. 16, reference signs 42a and 42b denote a quartz window, 47 denotes aa beam damper, 48 denotes a valve, and 49 denotes drainage.

It is assumed that the laser device 40 outputs power of about 100 mJ to 1 J and is a YAG pulse laser having a wavelength of, for example, 1064 nanometers.
Examples of ions can be obtained or detected by this laser emission method include Na ions, Mg ions, K ions, Ca ions, Fe ions, and Cl ions.
It is thereby possible to promptly detect corrosive components such as the Fe ions.

The present embodiment has been described while referring to, for example, a wind power generator as the outdoor structure according to the present invention. However, the present invention is not limited thereto, and can be also applied to a structure for which it is necessary to take measures against salt damage on a coast or the like such as bridge equipment or a solar battery device. In addition, the present invention is also applicable to measures against salt damage for a moving unit such as a vehicle or a ship.

### Industrial applicability

As described above, the outdoor structure according to the present invention is configured so that a coating film identical to that applied onto a material of each constituent member is applied and so that the deterioration degree of each constituent member can be estimated by deterioration due to a temporal change of the coating film, and the outdoor structure is suited to be used to determine the deterioration of each of the constituent members of, for example, a wind power generator.

### Reference Signs List

11A, 11A-1, 11A-2, 11B corrosion sensor
12 substrate
13A, 13B material
14 insulating unit
15 conductive unit
16A, 16B coating film
19 corrosive factor
20A, 20B, 20B-1, 20B-2 ion counter
20C laser-based ion counter
21 rainwater containing corrosive factor
22 rainwater collection chamber
23 ion electrode
30 rainwater capturing unit

## Claims

1. An outdoor structure comprising a corrosion sensor that detects a corrosion current, the corrosion sensor being provided in at least one portion of an outer surface of the outdoor structure exposed to an external air environment, wherein
a substrate of the corrosion sensor is made of a material identical to a material of each of constituent members of a structure, and
a coating film is provided to cover a plurality of conductive units provided on a surface of a substrate of a corrosion sensor via insulating units, respectively with the coating film, and is applied entirely onto a surface of the structure, the coating film being identical to a coating film applied onto each of the constituent elements.

2. The outdoor structure according to claim 1, wherein an ultraviolet ray is irradiated onto the corrosion sensor from an ultraviolet lamp.

3. The outdoor structure according to claim 1, wherein
the corrosion sensor is located in a dent portion of a bowl unit provided on an outer surface of a structure in a horizontal state, and
the coating film is provided to cover the conductive units with the coating film and applied entirely onto a conical surface and a surface of the structure.

4. The outdoor structure according to any one of claims 1 to 3, wherein the outdoor structure is a wind power generator.

5. A method of estimating deterioration of a constituent member of an outside structure, the outside structure comprising a corrosion sensor that detects a corrosion current, the corrosion sensor being provided in at least one portion of an outer surface of the outdoor structure exposed to an external air environment, wherein
a substrate of the corrosion sensor is made of a material identical to a material of each of constituent members of a structure, and
the method comprising:
covering a plurality of conductive units provided on a surface of a substrate of a corrosion sensor via insulating units, respectively with a coating film, and applying the coating film entirely onto a surface of the structure, the coating film being identical to
a coating film applied onto the constituent member; and
estimating a deterioration degree of each constituent member by deterioration due to a temporal change.

6. The method of estimating deterioration of a constituent member of an outside structure according to claim 5, wherein
a deterioration degree is estimated in advance by a deterioration acceleration test.

7. A method of monitoring a life of a constituent member of an outdoor structure, the method being for monitoring a life of the constituent member of a structure exposed to an external air environment by a corrosion current using a corrosion sensor, the corrosion sensor being provided in at least one portion of the structure and detecting the corrosion current indicating salt damage information, wherein
a substrate of the corrosion sensor is made of a material identical to a material of each of constituent member of a structure,
a first corrosion sensor and a second corrosion sensor are used for the method, wherein
a coating film is provided to cover a plurality of conductive units provided on a surface of the substrate of the first corrosion sensor via insulating units, respectively with the coating film, and is applied entirely onto a surface of the structure, the coating film being identical to a coating film applied onto each of the constituent elements, and
the coating film is not applied onto the second corrosion sensor differently from the first corrosion sensor, and
the comprising:
causing the first corrosion sensor to measure a quantity of corrosion electricity at an end of a life by a time the corrosion current is detected;
causing the second corrosion sensor to measure an accumulated quantity of electricity of the corrosion current; and
issuing a warning when a a total quantity of electricity measured by the second corrosion sensor exceeds a value of a quantity of corrosion electricity at an end of the life.

8. The method of monitoring a life of a constituent member of an outdoor structure according to claim 7, wherein when a current equal to or higher than a predetermined current value is detected when measuring a total quantity of electricity of the corrosion current using the second corrosion sensor, then it is determined that the current corresponds to a time for which the outdoor structure becomes wet with rain, and this quantity of electricity corresponding to the time for which the outdoor structure becomes wet with rain is to be excluded from the total quantity of electricity.

9. The method of monitoring a life of a constituent member of an outdoor structure according to claim 7, wherein
when a current equal to or higher than a predetermined current value is detected when measuring a total quantity of electricity of the corrosion current using the second corrosion sensor, then it is determined that the current corresponds to a time for which the outdoor structure becomes wet with rain, and this quantity of electricity corresponding to the time for which the outdoor structure becomes wet with rain is to be excluded from the total quantity of electricity, and
the structure is dehumidified.

10. An outdoor structure comprising an ion counter being provided in at least one portion of a structure exposed to an external air environment and detecting information on ions resulting in salt damage, wherein
the ion counter includes:
a rainwater collection chamber that temporarily collects rainwater; and
an ion electrode that is provided in the rainwater collection chamber and analyzes ions.

11. An outdoor structure comprising an ion counter being provided in at least one portion of a structure exposed to an external air environment and detecting information on ions resulting in salt damage, wherein
the ion counter includes:
a rainwater collection chamber that temporarily collects rainwater; and an ion chromatograph that is provided in the rainwater collection chamber and analyzes ions.

12. An outdoor structure comprising an ion counter being provided in at least one portion of a structure exposed to an external air environment and detecting information on ions resulting in damage, wherein
the ion counter measures ions by laser measurement.

13. The outdoor structure according to any one of claims 10 to 12, comprising a rainwater capturing unit, wherein
the rainwater capturing unit is provided in an upper portion of the rainwater collection chamber, and
the rainwater capturing unit drops falling rainwater into the rainwater collection chamber from a bowl unit that collects rainwater containing a corrosive factor in a dent portion of a conical center and a hole that communicates with the dent portion.

14. The outdoor structure according to claim 13, wherein a coating film identical to a coating film applied onto a surface of each of constituent elements of a structure is applied onto a conical surface of the bowl unit.

15. The outdoor structure according to any one of claims 10 to 14, wherein the outdoor structure is a wind power generator.
